# EUROPÄISCHE PATENTSCHRIFT

(11) **EP 1 774 871 B1**
(45) Veröffentlichungstag und Bekanntmachung des Hinweises auf die Patenterteilung: **24.02.2010**
(21) Anmeldenummer: 06120801.3
(22) Anmeldetag: 16.09.2006
(51) Int. Cl.: A47C 3/026, A47C 9/00, F16F 1/373, F16F 1/36

(54) **Vorrichtung zur Anpassung eines Sitzmöbels an das Körpergewicht und den Schwerpunkt einer Person**
Device for adjusting a seating furniture to the body weight and the centre of gravity of a person
Dispositif pour ajuster un meuble d'assise au poids corporel et centre de gravité d'une personne

(30) Priorität: 14.10.2005 DE 102005049179
(43) Veröffentlichungstag der Anmeldung: 18.04.2007
(73) Patentinhaber: Pürner, Christoph, 95615 Marktredwitz (DE)
(72) Erfinder: Pürner, Christoph, 95615 Marktredwitz (DE)
(74) Vertreter: Lange, Heinke

(56) Entgegenhaltungen:
- DE-A1- 2 432 248
- DE-U1- 20 106 173
- US-A- 4 736 984

## Beschreibung

Die Erfindung betrifft eine Vorrichtung zur Anpassung des Körpergewichts einer Person an Sitzmöbel, so dass die Person sich stets im Gleichgewicht befindet.

Es handelt sich um Sitzmöbel, die vorzugsweise in Büros eingesetzt werden, und die mit einer Synchronmechanik oder einem Pendelsystem ausgerüstet sind. Bei diesen Sitzmöbeln befindet sich zwischen dem Fuß und der Sitzfläche eine Synchronmechanik oder ein elastisches Element, welches die Körperbewegungen einer darauf sitzenden Person ausgleicht, so dass der Schwerpunkt der Person weitestgehend lotrecht zum Schwerpunkt des Stuhls bleibt. Pendelt die Person leicht nach vorne, wird ihr Schwerpunkt leicht nach vorne verschoben. Die Sitzfläche neigt sich dann ebenfalls leicht nach vorne, das elastische Element wird verspannt und die Person richtet sich auf, bis das System wieder im Gleichgewicht ist, d.h. die Schwerkraft kompensiert ist. Dieses Pendelsystem sorgt dadurch für eine gesunde entspannte Körperhaltung.

In dem US-A 4 736 984 wird ein Schaukelstuhl beschrieben, der eine Plattfeder zwischen dem Untergestell und dem Stuhl enthält, die drehbar gelagert ist, und dadurch eine Kippbewegung des Stuhles nach vorne oder nach hinten erlaubt. Eine Person müsste immer mit ihrem Schwerpunkt im Zentrum auf dem Stuhl sitzen. Neigt sie sich nach vorne, kippt der Sitz nach vorne und beugt sie sich nach hinten, kippt der Sitz nach hinten. Ist die Person schwergewichtig, kann sie diese Forderung u.U. nicht erfüllen, d.h. ihr Schwerpunkt liegt vor dem Zentrum des Stuhles, sie bekommt dadurch ein Drehmoment nach vorne. Eine zu leichte Person hat u.U. Mühe, sich nach vorne zu beugen, wenn ihr Schwerpunkt hinter dem Zentrum des Stuhles liegt. Diese Lösung kann das Körpergewicht einer Person nicht anpassen.

In der In dem Patent US-A 5 649 740 wird eine Lösung vorgeschlagen, bei der zwischen Sitzfläche und Fuß ein flächiges Federelement liegt, das kontinuierlich einstellbar ist. Damit kann zwar eine Anpassung an eine weicher oder härter eingestellte Sitzfläche erreicht werden, aber eine Anpassung an die Tätigkeit einer auf dem Stuhl sitzenden Person erfolgt nicht. Das heißt eine Anpassung des Schwerpunktes der Person an den Schwerpunkt des Stuhles wird nicht erreicht.

DE 299 05 547 U1 ist eine Aufhängevorrichtung für ein Sitz oder Liegemöbel mit einem Modul ausgerüstet, dass eine Relativbewegung zwischen Fuß und Sitz- bzw. Liegefläche ermöglicht. Das Modul umfasst Pendelelemente, die aus wenigstens einem ringförmigen, elastischen Verbindungselement bestehen, das zwischen einer Trägerscheibe und einem Trägerelement angeordnet ist, und welches eine elastische Kopplung des Moduls mit dem Fuß herstellt. Neben dem Ausgleich der Pendelbewegungen der Person wird außerdem eine Dämpfung bei Dreh-, Kipp- und Horizontalbewegung der darauf sitzenden Person erreicht.

In der DE 201 06 173U1 wird eine Lösung vorgeschlagen, bei der ein zusätzlicher Dämpfungsring unter der Trägerscheibe angeordnet ist, der mit Hilfe eines mittig eingeführten Bolzens gegen das Verbindungselement gespannt werden kann. Das so ausgerüstete Sitz- oder Liegemöbel kann während der Fertigung durch eine Verspannung des Bolzens an ein größeres oder kleineres Gewicht einer Person angepasst werden. Um eine möglichst ruhige Sitzhaltung zu erreichen, ist es nämlich erforderlich, die Federspannung des elastischen Verbindungsglieds zu erhöhen oder zu verringern, um die Reaktion auf die Schwerpunktsverschiebung träger oder weniger träge einzustellen. Diese Einstellung wird nur einmal vorgenommen und kann später nur werksseitig verändert werden.

Der Nachteil der beiden letztgenannten Lösungen besteht darin, dass sie nur für etwa normalgewichtige Personen eine volle Funktionsfähigkeit besitzen. Sitzt eine übergewichtige Personen mit einer großen Körperfülle auf einem Bürostuhl, und ihr Schwerpunkt liegt außerhalb des Schwerpunktes des Stuhls, dann wird ihr Schwerpunkt nicht mehr vollständig vom Stuhl unterstützt, die Person ist nicht mehr im Gleichgewicht. Es entsteht ein Drehmoment, das für sich schon ein unbehagliches Gefühl hervorruft, aber das noch verstärkt wird, wenn sich diese übergewichtige Person nach einer Seite, oder etwa nach vorne neigt. Sie hat dann das ungute Gefühl, nach vorne zu fallen. Sie stellt deshalb die Beine nach vorne und neigt sich weit nach hinten. Ein Arbeiten wird fast unmöglich. Die Schwerkraft kann nicht mehr ohne Kraftanstrengung oder unnatürliche Haltung kompensiert werden. Gewollte Lageveränderungen, weil sich diese auf dem Bürostuhl sitzende Person z.B. über einen Schreibtisch beugt, werden fast unmöglich. Das Drehmoment wird so groß, dass es vom herkömmlichen Pendelsystem nicht mehr kompensiert werden kann.

Es ist deshalb die Aufgabe der vorliegenden Erfindung eine Vorrichtung vorzuschlagen, die eine Anpassung des Gewichtes einer Person an Sitzmöbel mit einfachen Mitteln erlaubt.

Die Aufgabe wird durch die Merkmale des Hauptanspruchs erfüllt. Die Unteransprüche zeigen Weiterentwicklungen und Ausgestaltungen der Lösung.

Die Vorrichtung zur Anpassung des Körpergewichtes einer Person an Sitzmöbel, bei dem zwischen Fuß und Sitz- oder Liegefläche ein flächiges elastisches Verbindungselement vorhanden ist, wobei die Vorspannung des flächigen elastischen Verbindungselements kontinuierlich einstellbar ist wobei die Vorrichtung das das Federelement aufweisende flächige elastische Verbindungselement aufweist, besitzt in bestimmten Bereichen des flächigen elastischen Verbindungselements zusätzliche mit Einstellelementen gekoppelte flächige Federn zur zusätzlichen selektiven Veränderung der Federspannung des flächigen elastischen Verbindungselements, so dass in bestimmten Bereichen eine größere einstellbare Federspannung einstellbar ist. Das flächige elastische Federelement kann so gestaltet sein, dass in bestimmten Bereichen zusätzlich zur Grundspannung des elastischen Federelementes eine größere oder kleinere Spannung einstellbar ist.

Die Federspannung kann z.B. im Bereich des vorderen Teils des Stuhles stark vergrößert sein und in den seitlichen Bereichen geringer. Dadurch wird die Elastizität in diesen Bereichen verringert. Der Sitz wird vorne härter und das Drehmoment kann leichter behoben werden. Die größere Federspannung kann in ausgewählten Bereichen durch zusätzliche flächige Federn erzeugt werden. Die zusätzliche flächige Feder kann auch ein Segment oder einen Ring darstellen, die bis 60 % des vorderen Bereichs des flächigen elastischen Verbindungselements bedecken. Es ist auch möglich, dass das flächige elastische Verbindungselement von einem weiteren flächigen elastischen Federelement unterstützt ist, dass an verschiedenen Punkten über seinem Umfang unterschiedlich stark an das flächige elastische Verbindungselement spannbar ist, oder das elastische Verbindungselement wird in ausgewählten bereichen selektiv gespannt. Die dazu erforderliche Spanneinrichtungen können aus in den ausgewählten Bereichen an dem elastischen Verbindungselement von außen bedienbaren Justierplatten mit dem dazu erforderlichen Bedienelement bestehen.

Zusätzlich dazu kann die gesamte Vorspannung des flächigen elastischen Verbindungselements eingestellt werden. Diese Einrichtung, die ebenfalls von außen bedienbar ist, besteht aus zwei Druckplatten, die über ein Schneckengetriebe, das mit einem Handhebel bedienbar ist, gegen das flächige Verbindungselement gespannt werden. Das Schneckengetriebe besteht aus einem Schneckenrad, das in der Scheibe liegt, und einer daran angreifenden Zahnstange, die mit dem Handhebel verbunden ist, wobei beim Spannen des elastischen Verbindungselementes die Scheibe gegen eine der Druckplatten gedrückt wird, während die andere Druckplatte fest steht.

Es ist in einer weiteren Ausgestaltung der Erfindung möglich, dass ein Steuergerät vorhanden ist, das ein entstehendes Drehmoment elektronisch erfasst und durch automatische Veränderung der Federspannung ausgleicht.

Sitzt jetzt eine große, schwere Person auf dem Stuhl, kann das elastische Verbindungselement so über zwei Druckplatten, zwischen denen sich das elastische Verbindungselement befindet, vorgespannt werden, dass seine Bewegungen seinem Körpergefühl entsprechend ausgeglichen werden. Den Bewegungen der Person wird so ein größerer Widerstand entgegengesetzt.

Besitzt eine Person außerdem eine große Körperfülle, ist nicht mehr gewährleistet, dass ihr Schwerpunkt in der Schwerpunktachse des Stuhles liegt. Sie erfährt bereits ein Drehmoment nach vorne, wenn sie aufrecht auf dem Stuhl sitzt. Um diesem entgegen zu wirken, wird sie sich stark nach hinten lehnen. Damit nimmt sie zwar eine gesunde Haltung an, kann aber nicht arbeiten, wenn sie sich nach vorne oder zur Seite neigen muss. Durch eine einfache Bedienung am Stuhl kann sie mit Hilfe der erfindungsgemäßen Vorrichtung den vorderen Bereich des elastischen Verbindungselementes so stark vorspannen, dass der Schwerpunktsverlagerung ein entsprechend großer Widerstand entgegengesetzt wird. Derselbe Effekt wird erreicht, wenn die seitlichen Bereiche des elastischen Verbindungselementes in der Spannung verstärkt werden. Dieser Effekt kann dann sehr wichtig werden, wenn Personen auf dem Stuhl sitzen, deren Schwerpunkt aufgrund einer Fehlbildung oder-haltung nicht symmetrisch zu den Körperhälften liegt.

Der weitere wesentliche Vorteil der vorliegenden Erfindung besteht darin, dass die Vorrichtung auch als separates Teil gefertigt werden und zur Nachrüstung anderer Sitzträgersysteme dienen kann. Auf diese Weise erhalten vorhandene Stühle nicht nur ein komfortables Sitzvermögen, sie können auch an die besonderen Bedingungen körperfülliger oder behinderter Menschen angepasst werden.

Die Erfindung soll nachfolgend an einem Ausführungsbeispiel anhand von Zeichnungen erläutert werden.

Fig. 1 zeigt eine Vorrichtung zur Anpassung des Körpergewichtes und des Schwerpunkts einer Person an ein Pendelsystem entsprechend der vorliegenden Erfindung, und

Fig. 2 zeigt eine füllige Person auf einem Bürostuhl, wenn kein Ausgleich von Körpergewicht und Schwerpunkt erfolgt.

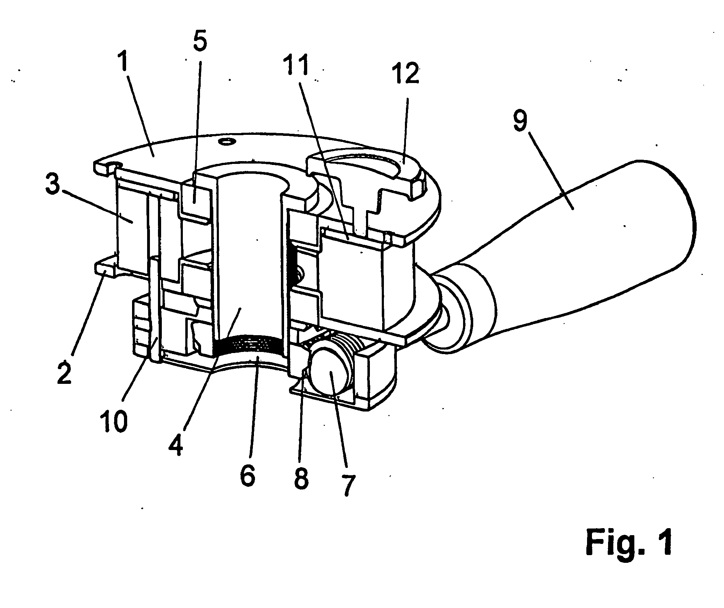

In Fig. 1 ist ein Ausführungsbeispiel der Vorrichtung entsprechend der vorliegenden Erfindung dargestellt. Zwischen zwei Druckplatten 1 und 2 befindet sich ein elastisches Federelement 3. Diese Anordnung 1, 2, 3 ist über einen elastischen Ring 5 mit dem Hüllrohr 4 zur Aufnahme der Gasfeder eines Bürostuhls gekoppelt. Unterhalb der unteren Druckplatte 2 befindet sich eine Lagerschale 6, in der ein Schneckengetriebe, bestehend aus einem Gewinde 8 in der Lagerschale 6 und einer Schnecke 7, die mit einem Handgriff 9 verbunden ist. Die Lagerschale 6 ist über Arretierstifte 10 mit der Druckplatte 2 verbunden, so dass die Lagerschale 6 durch Betätigung des Handgriffs 9 über das Schneckengetriebe gegen die Druckplatte 2 getrieben werden kann und dadurch das elastische Federelement 3 spannt. Außerdem befindet sich in bestimmten ausgewählten Bereichen des elastischen Federelementes 3 Justierplatten 11, die über von außen bedienbaren Justierschrauben 12 unabhängig voneinander gegen das elastische Federelement 3 gespannt werden können, so dass das elastische Federelement 3 zusätzlich selektiv gespannt werden kann.

Mit dieser Vorrichtung gemäß Erfindung kann das Gewicht und die Körperfülle einer auf einem derart ausgerüsteten Bürostuhl sitzenden Person angepasst werden. Mit dem Handgriff 9 wird das elastische Federelement 3 so gespannt, dass die Person einen festen Sitz erhält. Eine zu weiche Federung würde Unsicherheit hervorrufen. Durch die Betätigung der Justierschrauben 12 wird das elastische Federelement 3 selektiv verstärkt, so dass ein verlagerter Schwerpunkt einer fülligen oder behinderten Person optimal unterstützt wird.

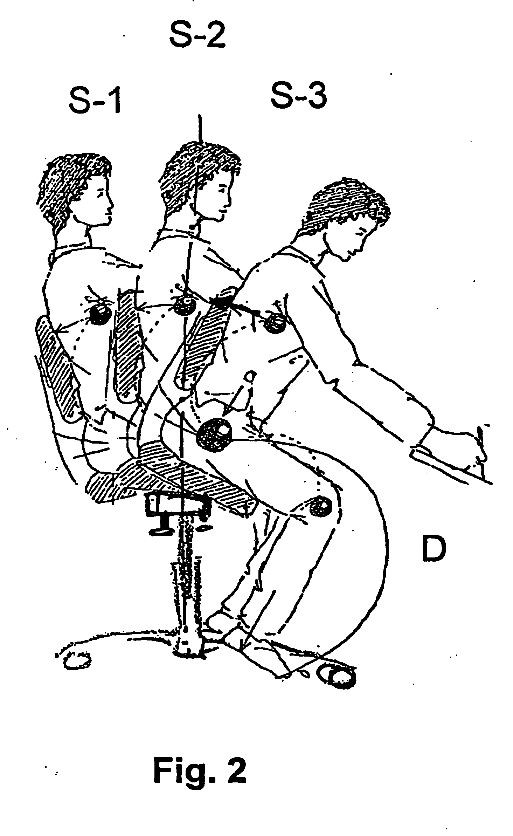

Aus Fig. 2 wird deutlich, wie sich der Schwerpunkt einer Person verlagert, wenn sie sich auf einem Bürostuhl nach hinten oder vorne beugt. Ihr Schwerpunkt S-2 wird dadurch entweder nach hinten S-1 oder nach vorne S-3 verlagert und es entsteht ein Drehmoment D, das aus dem Produkt der Größe der Verschiebung des Schwerpunktes S-2 und dem Gewichtes der Person besteht, und demzufolge um so größer ist, je schwerer die Person ist und um so weiter sie sich nach hinten oder vorne beugt. Beugt sie sich nach hinten, wird sie durch dieses Drehmoment D an die Rückenlehne gepresst, beugt sie sich nach vorne, kann sie stürzen oder sie verlagert den Schwerpunkt, indem sie die Beine nach vorne stellt. In der Stellung S-2 wird der Schwerpunkt der Person vom System unterstützt. Bei Einsatz der Vorrichtung entsprechend der vorliegenden Erfindung wird die Schwerpunktverschiebung kompensiert, je nachdem wo die selektive Vorspannung im elastischen Verbindungselement zwischen Fuß und Sitzfläche eingestellt wird.

Bezugszeichenliste
- 1.: Druckplatte
- 2.: Druckplatte
- 3.: Elastisches Federelement
- 4.: Hüllrohr
- 5.: Elastischer Ring
- 6.: Lagerschale
- 7.: Schnecke
- 8.: Gewinde
- 9.: Handgriff
- 10.: Arretierstift
- 11.: Justierplatte
- 12.: Justierschraube

## Patentansprüche

1. Vorrichtung zur Anpassung des Körpergewichtes an mit einem Pendelsystem ausgerüsteten Sitzmöbel, bei dem zwischen Fuß und Sitzfläche ein ein Federelement aufweisendes flächiges elastisches Verbindungselement vorhanden ist, und die Vorspannung des Federelementes (3) des flächigen elastischen Verbindungselements kontinuierlich einstellbar ist wobei die Vorrichtung das das Federelement aufweisende flächige elastische Verbindungselement aufweist, **dadurch gekennzeichnet, dass** in bestimmten Bereichen des flächigen elastischen Verbindungselements zusätzliche mit Einstellelementen gekoppelte flächige Federn zur zusätzliche selektiven Veränderung der Federspannung des flächigen elastischen Verbindungselements vorhanden sind, so dass in bestimmten Bereichen eine größere einstellbare Federspannung einstellbar ist.

2. Vorrichtung zur Anpassung des Körpergewichtes nach Anspruch 1, **dadurch gekennzeichnet, dass** die zusätzlichen flächigen Federn von Justierplatten (11) gebildet werden, die Segmente oder andere Formen bilden und das elastische Federelement (3) selektiv bedecken, und die Justierplatten (11) über Justierschrauben (12) gegen das elastische Federelement (3) spannbar sind.

3. Vorrichtung zur Anpassung des Körpergewichtes nach Anspruch 2, **dadurch gekennzeichnet, dass** die Vorspannung des flächigen elastischen Federelements (3) mittels einer Lagerschale (6) einstellbar ist, die über ein Schneckengetriebe, das mit einem Handgriff (9) bedienbar ist, gegen das flächige Federelement (3) spannbar ist.

4. Vorrichtung zur Anpassung des Körpergewichtes nach einem der Ansprüche 1 bis 3, **dadurch gekennzeichnet, dass** ein Steuergerät vorhanden ist, das ein entstehendes Drehmoment, das aus dem Produkt der Größe der Verschiebung des Schwerpunktes S-2 und dem Gewicht einer auf der Sitzfläche sitzenden Person besteht, elektronisch erfasst und durch automatische Veränderung der Federspannung ausgleicht.

## Claims

1. A device for adjusting seating furniture to the body weight of a person on seating fitted with a floating system on which there is a flat elastic connecting element acting as a spring element fitted between the foot and the surface of the seat and the pre-tension of the spring element (3) of the flat elastic connecting element is continuously adjustable, whereby the device has a flat elastic connecting element acting as a spring element, **characterised by** the fact that there are additional coupled flat springs fitted with adjusting elements with in various areas of the flat elastic connecting element for selective alteration of the spring tension of the flat elastic connecting elements so that a greater adjustable spring tension can be obtained in certain areas.

2. A device for adjusting to the body weight of a person according to Claim 1 **characterised by** the fact that the additional flat springs are made out of adjusting plates (12) which create segments or other forms and which selectively cover the spring element (3) and he adjusting plates (12) can be tensioned against the elastic spring element (3) using adjusting screws (12).

3. A device for adjusting to the body weight of a person according to Claim 2 **characterised by** the fact that the pre-tension of the flat elastic spring element (3) can be adjusted using a bearing seat (6) which can be actuated over a worm gear operated, operated by a hand grip (9), and which can be tensioned against the flat spring element (3).

4. A device for adjusting to the body weight of a person according to claims 1 to 3 **characterised by** the fact that there is a control system installed which electrically detects a torque which is being produced from the product of the size of the shift in the centre of gravity S-2 and the weight of a person sitting on the seating surface and which compensates for it through automatic alteration of the spring tension.

## Revendications

1. Dispositif pour adaptation du poids à un siège équipé d'un système oscillant, un élément de liaison plan et élastique présentant un moyen formant ressort existant entre pied et siège, et la précontrainte du moyen formant ressort (3) de l'élément de liaison plan et élastique étant réglable en continu, le dispositif présentant l'élément de liaison plan et élastique portant le moyen formant ressort, **caractérisé en ce que** dans certaines zones du moyen plan et élastique formant ressort des ressorts plans additionnels couplés avec des éléments de réglage existent pour la modification additionnelle sélective de la tension du ressort de l'élément de liaison plan et élastique de sorte que dans certaines zones une tension du ressort réglable plus grande peut être ajustée.

2. Dispositif pour adaptation du poids selon la revendication 1, **caractérisé en ce que** les ressorts plans additionnels sont formés par des plaques d'ajustement (11) formant des segments ou d'autres formes couvrant sélectivement le moyen élastique formant ressort (3), et les plaques d'ajustement (11) pouvant être tendu par des vis de réglage (12) contre le moyen élastique formant ressort (3).

3. Dispositif pour adaptation du poids selon la revendication 2, **caractérisé en ce que** la précontrainte du moyen plan et élastique formant ressort (3) est réglable au moyen d'un coussinet de palier (6) pouvant être tendu par un engrenage à vis sans fin - qui peut être commandé par une poignée de manoeuvre (9) - contre le moyen plan formant ressort (3).

4. Dispositif pour adaptation du poids selon l'une de revendications 1 à 3, **caractérisé en ce qu'**un dispositif de manoeuvre existe détectant électroniquement un couple formant, qui comporte le produit de la grandeur du déplacement du centre de gravité S-2 et le poids d'une personne étant assise sur le siège, et l'équilibrant par modification automatique de la tension du ressort.
